# FASCICULE DE BREVET EUROPEEN

(11) **EP 2 805 068 B1**
(45) Date de publication et mention de la délivrance du brevet: **16.12.2020**
(21) Numéro de dépôt: 12705713.1
(22) Date de dépôt: 18.01.2012
(51) Int. Cl.: F16B 21/04

(54) **SYSTEME DE COUPLAGE**
KOPPLUNGSSYSTEM
COUPLING SYSTEM

(43) Date de publication de la demande: 26.11.2014
(73) Titulaire: De Ruffray, Patrick, 03630 Desertines (FR)
(72) Inventeur: De Ruffray, Patrick, 03630 Desertines (FR)
(74) Mandataire: Thurgood, Alexander John
(86) Numéro de dépôt international: PCT/IB2012/050245
(87) Numéro de publication internationale: WO 2013/108078

(56) Documents cités:
- DE-A1-102004 022 389
- DE-B3- 10 344 796
- GB-A- 2 155 985
- GB-A- 2 456 950

## Description

La présente invention concerne un système de couplage, pouvant trouver application dans différentes situations, notamment pour l'assemblage d'éléments de construction, panneaux, boiseries, blocs, mobilier, etc, en métal, matière plastique ou bois, par exemple.

Des systèmes de couplage notamment destinés à une application d'assemblage d'éléments impliquant un ou plusieurs composants sont assez largement connus. De manière générale, ces systèmes de couplage multi-composant comprennent un composant mâle et un composant femelle. Il peut s'agir, par exemple, d'un boulon et son écrou. Dans un exemple plus sophistiqué, il est par exemple connu d'utiliser un composant femelle sensiblement cylindrique et creux présentant une ouverture s'étendant sur une partie de la surface circonférentielle du cylindre et pratiquée dans celle-ci, et un composant mâle prenant la forme d'une vis ou autre corps plein allongé, et présentant à son extrémité de couplage une tête, généralement arrondie, qui s'insère dans l'ouverture depuis l'extérieur à un angle de 90°. Le couplage se fait alors en appliquant une rotation du composant femelle, généralement comprise entre un quart et un demi-tour, de sorte que la tête du composant mâle vient se loger dans une encoche de diamètre plus réduit que la tête du composant mâle et prévue à cet effet dans le corps du composant femelle. Ainsi, le composant mâle est bloqué dans le composant femelle et le couplage assuré. Le déblocage du couplage se fait en appliquant une rotation du composant femelle dans le sens inverse pour ainsi libérer la tête du composant mâle. Ces opérations s'effectuent nécessairement avec un tournevis ou autre outil approprié.

La demande de brevet britannique GB2456950 divulgue d'un système de poteau dont l'objectif est de pouvoir être posé et enlever à volonté et en fonction des besoins. Le système de poteau amovible comporte de multiples éléments, dont un corps cylindrique de poteau, une tige positionnée de manière centrale et co-axiale dans l'alésage intérieur du corps cylindrique de poteau et pouvant coulisser le long de l'axe longitudinale intérieur du corps de poteau. La tige dépasse à son extrémité inférieure du corps cylindrique de poteau pour former des projections pour un couplage à baïonnette qui est fixée par rotation dans une plaque d'ancrage munie d'une paire de fentes sensiblement semi-circulaires, concentriques et sous forme d'arc de cercle, l'épaisseur et la forme desdites fentes étant complémentaires à la forme et à l'épaisseur des projections en forme d'arc de cercle, prévues à l'extrémité de la tige, de telle sorte que lesdites projections puissent s'engager à travers lesdites fentes.

La demande de brevet allemand DE102004022389 se rapporte à un système de fixation pour murs et plafonds, le système comprenant une cheville avec une partie rigide ou résistante et une partie munie de fentes lui permettant de se dilater lors du rapprochement d'une tige à expansion depuis l'extrémité distale dans l'alésage de la cheville en direction de l'extrémité proximale de la cheville.

La demande de brevet britannique GB2155985 divulgue une bague ouverte aux deux extrémités opposées pouvant recevoir différents objets pleins en guise de composant mâle, ceux-ci étant munis d'ergots.

L'inconvénient principal des systèmes de couplage connus, dont celui décrit ci-dessus, est que les composants les constituant sont essentiellement des pièces séparées. Cela veut dire, par exemple, que lorsque l'on démonte les objets ayant été assemblés avec ces systèmes de couplage, on est obligé de prendre soin de garder les différentes pièces et de ne pas les perdre. De la même manière, il est en règle générale impossible de déplacer les objets démontés ou découplés tout en gardant les éléments du système de couplage dans les objets, car les composants du système de couplage ont tendance à tomber, et ainsi potentiellement se perdre.

La présente invention propose une solution à ces inconvénients, qui consiste en un système de couplage comprenant au moins un composant mâle et un composant femelle, dans lequel le composant mâle s'insère dans le composant femelle le long d'un axe longitudinal commun aux composants mâle et femelle, et est retenu par ce dernier de manière amovible :
- le composant mâle comprenant un corps allongé de forme sensiblement cylindrique, une extrémité ouverte et une extrémité fermée opposée ;
- le composant femelle comprenant un corps allongé de forme sensiblement cylindrique et présentant un alésage intérieur longitudinal de dimensions adaptées à l'insertion et à la rétention du composant mâle, une extrémité ouverte et une extrémité fermée opposée ;
- le composant mâle s'insérant par son extrémité ouverte dans l'extrémité ouverte du composant femelle par un mouvement de déplacement longitudinal en même temps qu'une rotation d'un quart de tour ;
- le composant mâle comportant des moyens de blocage en rotation et en déplacement le long de l'axe longitudinal coopérant avec des moyens d'arrêt complémentaires présents dans le composant femelle.

Le système de couplage proposé selon la présente invention est un ensemble de composants mutuellement coopérants, et dont les composants mâle et femelle ne se séparent pas, et avantageusement peut être rabattu en affleurement de la surface d'un des objets, de sorte que le système ne dépasse pas de la surface extérieure de celui-ci et ainsi ne risque pas de gêner la manutention de l'objet ou d'être cassé lors des déplacements ou transports des objets assemblables intégrant le système de couplage selon l'invention.

Comme le système de couplage selon l'invention, du fait de sa conception, est assez flexible au niveau des différentes applications et secteurs d'utilisation possibles, les composants mâle et femelle peuvent être fabriqués en différentes matières, et notamment, en métal, ou en matière plastique, et dont le choix et la manière de les produire se trouvent parmi les connaissances générales de l'homme du métier. On peut citer notamment à ce titre l'estampillage, l'emboutissage, par exemple, de métaux ou alliages de métaux, ou encore le moulage d'alliages de métaux ou de matières plastiques appropriées.

De préférence, les moyens d'arrêt complémentaires du composant femelle comprennent des projections se projetant au-delà d'une surface intérieure du corps allongé du composant femelle dans l'alésage intérieur de ce dernier.

De manière encore plus préférée, les moyens d'arrêt complémentaires du composant femelle comprennent des projections disposées à des positions diamétralement opposées sur le corps allongé, notamment en vis-à-vis. Les projections des moyens d'arrêt complémentaires peuvent être intégrés, c'est-à-dire contiguës, de la matière constituant le composant femelle, ou bien elles peuvent être des pièces rapportées au corps du composant femelle. Par exemple, dans le cas où le composant femelle est fabriqué en matière plastique, les projections des moyens d'arrêt complémentaires peuvent être directement moulées avec le corps du composant femelle. Si le composant femelle est fabriqué en métal ou alliage métallique, par exemple, notamment par emboutissage, les projections des moyens d'arrêt complémentaires peuvent alors être embouties en même temps que, et de manière intégrée à, le corps du composant femelle.

Le composant femelle comporte une extrémité fermée. Il est alors également préféré que le composant femelle comporte une projection située à l'extrémité fermée dans l'axe longitudinal du système de couplage et à l'intérieur de l'alésage du corps allongé du composant femelle.

Dans un mode d'exécution préféré du système de couplage selon l'invention, le composant femelle comporte des moyens de prise élastique avec une surface d'appui entourant le composant femelle, l'objectif étant de permettre au composant femelle d'être inséré et prendre appui dans un logement prévu à cet effet dans l'objet à assembler. Ces moyens de prise élastique se présentent de préférence sous forme de projections se projetant au-delà de la surface extérieure du corps allongé du composant femelle. Les projections peuvent être intégrées, c'est-à-dire contiguës, de la matière constituant le composant femelle, ou bien elles peuvent être de pièces rapportées au corps du composant femelle. Par exemple, dans le cas où le composant femelle est fabriqué en matière plastique, les projections peuvent être directement moulées avec le corps du composant femelle. Si le composant femelle est fabriqué en métal ou alliage métallique, par exemple, notamment par emboutissage, les projections peuvent alors être embouties en même temps que, et de manière intégrée à, le corps du composant femelle.

On pourrait toutefois envisager d'autres possibilités pour arriver au même objectif, par exemple, en réalisant le composant femelle en une matière semi-rigide et présentant, par exemple, une forme évasée en partant de l'extrémité fermée vers l'extrémité ouverte, de sorte que lors de l'insertion du composant femelle dans le logement prévu pour le recevoir, la forme évasée se déforme progressivement et élastiquement de manière à exercer une poussée contre les parois du logement prévu dans l'objet.

De préférence, les moyens de prise élastique avec une surface d'appui entourant le composant femelle sont disposés à des positions diamétralement opposés sur le corps allongé du composant femelle, notamment en vis-à-vis. Le nombre des moyens de prise élastique se situe de préférence entre zéro et huit, de préférence, entre une et quatre paires de moyens de prise élastique, en fonction des dimensions du corps allongé du composant femelle. Dans un autre mode d'exécution préféré, les moyens de prise élastique sont constitués par un bord périphérique annulaire, disposé sur le pourtour, et saillant vers l'extérieur de l'extrémité ouverte du composant femelle.

Le composant mâle comporte une extrémité fermée, et de manière encore plus préférée, l'extrémité fermée se présente sous forme de bouton-poussoir, destiné à recevoir un appui et une rotation, par exemple d'un doigt ou pouce, ou d'un tournevis, ou tout autre outil adapté.

L'extrémité opposée du composant mâle est ouverte.

De préférence également, le corps allongé de forme sensiblement cylindrique du composant mâle comporte un alésage axial pratiqué dans le corps allongé le long de l'axe longitudinal du système de couplage.

Dans le cas où l'extrémité du corps allongé du composant mâle est fermée, celle-ci présente de préférence un diamètre inférieur à un diamètre extérieur du corps allongé du composant femelle, mais supérieur à un diamètre intérieur du corps allongé du composant femelle. Une telle disposition permet notamment au composant mâle d'éviter un éventuel frottement ou une résistance avec notamment la matière des objets pourvus de logements destinés à recevoir le système de couplage, lors de son déplacement, mais elle présente également, lorsque le système de couplage est en position rabattue, l'avantage que l'extrémité fermée du composant mâle recouvre et ferme néanmoins l'alésage du composant femelle, et ainsi ne dépasse pas du logement prévu dans l'objet à assembler, donnant ainsi un aspect esthétique soigné et des plus agréables à l'œil.

Il est également préféré que le corps allongé du composant mâle se prolonge sous forme de projection depuis son extrémité fermée vers son extrémité ouverte. Dans ce cas, il est en outre préféré que la projection du corps allongé du composant mâle présente à la fois un diamètre inférieur à l'extrémité fermée du composant mâle, et un diamètre inférieur à un diamètre intérieur du corps allongé du composant femelle. Ainsi, la projection du corps allongé du composant mâle peut s'insérer dans l'alésage du corps allongé du composant femelle.

En ce qui concerne les moyens de blocage en rotation et en déplacement le long de l'axe longitudinal du composant mâle, ils sont de préférence situés sur la projection du corps allongé. Préférentiellement, mais non obligatoirement, les moyens de blocage en rotation et en déplacement le long de l'axe longitudinal du composant mâle se présentent sous forme de rainure pratiquée dans la projection du corps allongé du composant mâle. De manière encore plus préférée, la rainure pratiquée dans la projection du corps allongé du composant mâle est sensiblement parallèle à l'axe longitudinal du système.

On peut également envisager d'autres possibilités pour les moyens de blocage en rotation et en déplacement le long de l'axe longitudinal. Par exemple, au lieu d'avoir une rainure sensiblement parallèle à l'axe longitudinal, on pourrait prévoir une rainure oblique qui par conséquent opérerait une rotation du corps allongé du composant mâle en même temps que son déplacement le long de l'axe. Selon l'inclinaison de la rainure oblique par rapport à l'axe longitudinal, on obtiendrait une rotation plus ou moins accentuée.

De préférence, la rainure des moyens de blocage en rotation et en déplacement le long de l'axe longitudinal du composant mâle présente une première extrémité et une deuxième extrémité opposée sous forme d'encoches contiguës avec ladite rainure et disposées de manière sensiblement orthogonales à celle-ci, de dimensions adaptées à recevoir les moyens d'arrêt du composant femelle.

Il est encore plus préféré que la rainure et les encoches formant les première et deuxième extrémités soient pratiquées dans une surépaisseur de la projection du corps allongé du composant mâle, de diamètre inférieur à un diamètre intérieur du composant femelle. Cette surépaisseur définit avec l'extrémité fermée du composant mâle une partie du corps allongé du composant mâle présentant un diamètre inférieur à l'extrémité fermée, mais également inférieur à l'extrémité ouverte du composant mâle.

De manière préférée, le système de couplage selon l'invention comporte en outre un moyen de contrainte élastique, disposé à l'intérieur de l'alésage du corps allongé du composant femelle, et se logeant à l'intérieur du corps allongé du composant mâle. Préférentiellement, le moyen de contrainte élastique est un ressort, dont une première extrémité se repose sur l'extrémité fermée de l'alésage axial du corps allongé du composant femelle, disposé autour de la projection axiale de ce dernier, et dont l'extrémité opposée vient se loger dans l'alésage axial du corps allongé du composant mâle. Dans ce cas, le moyen de contrainte élastique est donc disposé le long de l'axe longitudinal du système de couplage. Le moyen de contrainte élastique se loge à l'intérieur du corps allongé du composant mâle contre une butée prévue dans l'alésage axial de ce dernier, ladite butée étant située à une hauteur inférieure à la longueur totale de la rainure et inférieure à la position correspondante de l'encoche de la deuxième extrémité.

Ainsi, et de manière préférée, le ressort exerce une contrainte élastique sur le composant mâle, et qui s'applique entre une première position bloquée dans laquelle les projections des moyens d'arrêt se trouvent à la deuxième extrémité de la rainure dans l'encoche, et une deuxième position bloquée opposée dans laquelle les projections des moyens d'arrêt se trouvent à la première extrémité opposée dans la première encoche.

En effet, la première position bloquée correspond à une position rabattue du système de couplage, le composant mâle se trouvant complètement inséré et retenu dans le composant femelle, hormis l'extrémité fermée qui vient en fermeture de l'extrémité ouverte du corps allongé du composant femelle. Cette position est maintenue contre la contrainte élastique du ressort par le biais des projections des moyens d'arrêt qui viennent buter en appui contre une surface de la deuxième encoche.

La position bloquée oposée, quant à elle, correspond à une position dans laquelle le corps allongé du composant mâle est poussé en dehors de l'alésage intérieur du corps allongé du composant femelle, libérant ainsi l'extrémité fermée du composant mâle et exposant la partie de diamètre réduit de ce dernier. Cette position est maintenue par la contrainte élastique du ressort, par le biais des projections des moyens d'arrêt qui viennent buter en appui contre une surface de la première encoche.

La course de déplacement longitudinal du corps allongé du composant mâle à l'intérieur du corps allongé du composant femelle est réglée en fonction des dimensions des composants mâle et femelle pour obtenir le fonctionnement voulu. Il est toutefois préféré que la course de déplacement longitudinal soit sensiblement égale à la longueur de la rainure pratiquée dans le corps allongé du composant mâle. De manière encore plus préférée, la course de déplacement longitudinal du corps allongé du composant mâle est inférieure à une dimension longitudinale de l'alésage du corps allongé du composant femelle.

Le système de couplage selon la présente invention sera en outre décrit de manière complémentaire en se référant à la description d'un exemple de réalisation détaillée donnée ci-après, et aux figures en annexe, dans lesquelles :
- la Figure 1 est une représentation d'un système de couplage selon l'invention, en vue pseudo-perspective, et en position rabattue ;
- la Figure 2 est une représentation schématique d'un système de couplage selon l'invention, en vue pseudo-perspective, et en position déployée ;

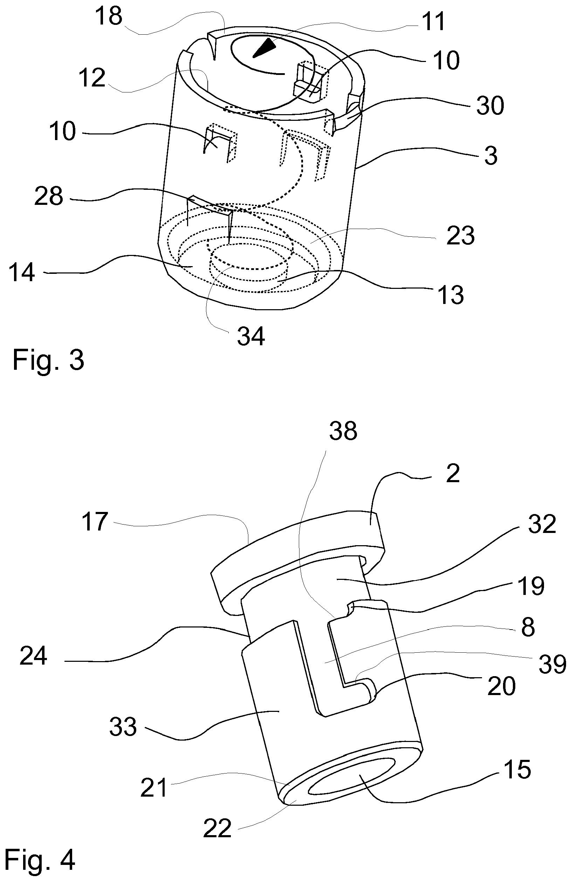

- la Figure 3 est une représentation schématique du composant femelle du système de couplage selon l'invention, en vue pseudo-perspective ;
- la Figure 4 est une représentation schématique du composant mâle du système de couplage selon l'invention, en vue pseudo-perspective ;

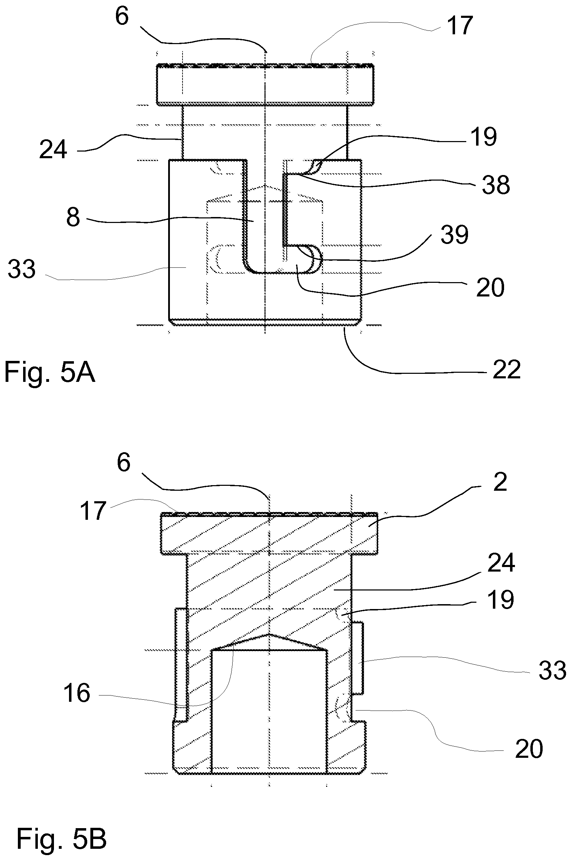

- la Figure 5A est une vue complémentaire de la Figure 4, du composant mâle du système de couplage selon l'invention, vue de côté ;
- la Figure 5B est une vue complémentaire de la Figure 4, du composant mâle du système de couplage selon l'invention, en section ou coupe transversale ;

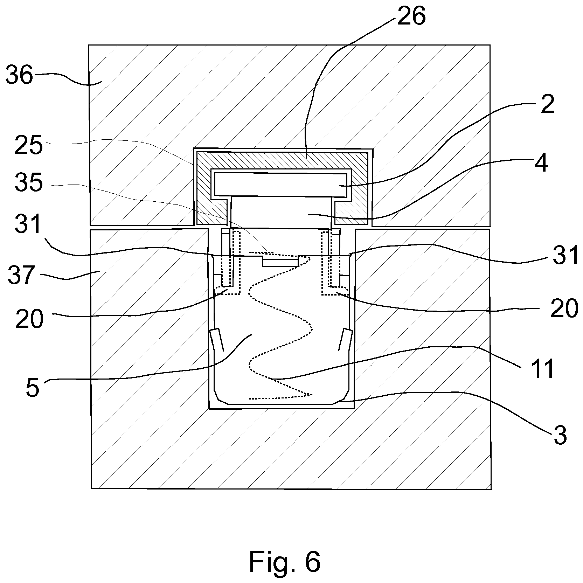

- la Figure 6 est une représentation schématique de l'assemblage de deux objets par le biais du système de couplage selon l'invention, en section transversale simplifiée.

Le présent exemple décrit la mise en œuvre du système de couplage selon l'invention pour monter des panneaux servant à constituer un meuble, par exemple, armoire, étagères, buffet, commode, etc. Pour les besoins de cet exemple, le système de couplage selon l'invention est encastrable dans les panneaux de bois, aggloméré, plastique ou métallique, et plus particulièrement dans l'épaisseur des montants qui mesure 22 mm. Deux systèmes, dos à dos, tiennent dans cette épaisseur. L'extrémité supérieure ou tête, escamotable, du corps allongé du composant mâle doit être à fleur de la surface du montant lorsqu'elle est rentrée. Sa longueur hors tout dans cet exemple mesure 11 mm lorsque la tête, à fleur du montant, est rentrée. Il y a deux colonnes de systèmes par montant, ces systèmes mesurant 8 mm de diamètre et, en général ne dépassant pas 10 mm de diamètre. Chaque montant mesure 50 mm de largeur. Il reste donc un minimum de matière de panneaux ou montant après perçage de l'emplacement des systèmes de couplage. Le système permet la libération du composant mâle ou l'enfermement de celui-ci dans le composant femelle. Ces opérations s'opèrent sans outil. L'objectif du système de couplage, lorsque le meuble est démonté, est d'éviter de laisser une pièce débordante des faces du côté ou de devoir ôter le piston et le ranger dans un sachet pour transporter le meuble d'un lieu à un autre. Ainsi, on évite les égratignures, les accrochages de vêtements, l'arrachage des tapisseries, le frottement de pièces métalliques lorsque les panneaux démontés sont empilés dans un camion ou une voiture ou encore de perdre les pièces désolidarisées des panneaux. L'ensemble est donc de petite taille, mais très résistant car, en fonctionnement, l'extrémité supérieure du composant mâle est généralement sorti et logé dans un logement correspondant d'un autre panneau ou montant, et par conséquent, elle est sollicité par des efforts de traction importants. Ainsi, il est préférable de fabriquer les composants du système d'assemblage en métal, notamment en acier inoxydable, en aluminium ou en laiton. Il pourra toutefois aussi être moulé en plastique, en choisissant une matière plastique dont la résistance sera équivalente à celle du métal.

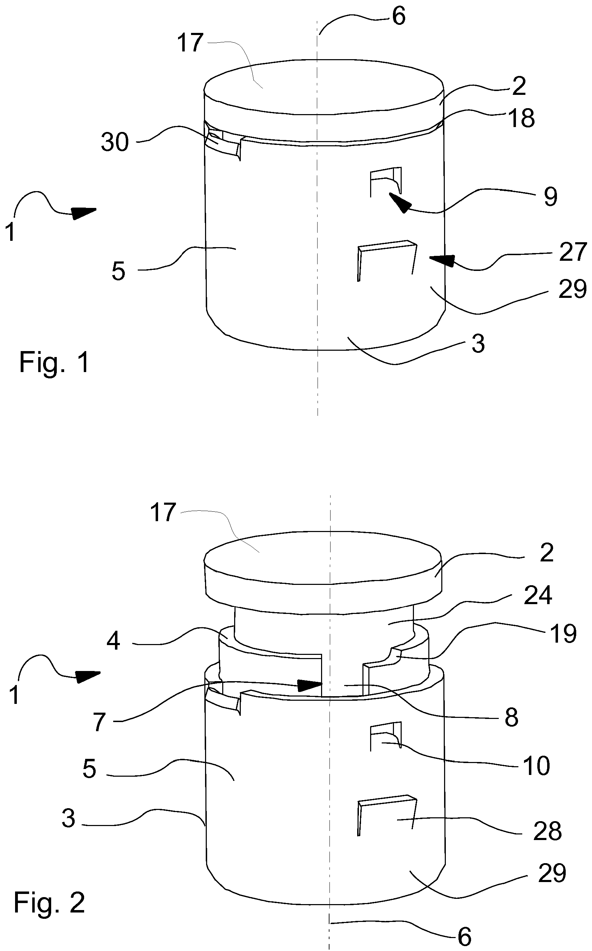

Le système de couplage, indiqué généralement aux figures 1 et 2 par la référence générale (1), comporte deux composants principaux : un composant mâle (2) et un composant femelle (3). Le composant mâle (2) et le composant femelle (3) présentent tous les deux des corps allongés (4, 5), de forme sensiblement cylindrique. Le composant femelle (3) reçoit le composant mâle (2) qui se déplace de bas en haut dans le composant femelle (3), le long d'un axe longitudinal (6) commun aux deux composants (2, 3). Des moyens de blocage (7) en rotation et en déplacement du composant mâle sont prévus sous la forme de rainures verticales (8) pratiquées de part et d'autre dans le corps allongé (4) du composant mâle (1) et des moyens d'arrêt (9) complémentaires, sont prévus dans le composant femelle (3) sous forme de projections (10) formées dans le corps allongé (5) du composant femelle (3).

Le composant mâle (2) est déplacé par le biais d'une contrainte élastique axiale sous la forme d'un ressort (11) tenu dans un alésage (12) du corps allongé (5) du composant femelle (3), grâce à une projection axiale intérieure (13) se projetant vers le haut depuis l'extrémité inférieure (14) du composant femelle (5) et reposant dans un alésage (15) du corps allongé (4) du composant mâle (2). Le ressort (11) se loge contre une butée (16) prévu dans l'alésage (15) du corps allongé (4). La butée peut prendre différentes formes, par exemple, une collerette annulaire disposée sur la surface intérieure de l'alésage (15) ou encore simplement une paroi supérieure définissant le fond de l'alésage (15).

Le composant femelle (3) est doté, sur son corps allongé (5), de deux projections intérieures (10), le corps, lorsqu'il est en métal, étant par exemple embouti vers l'intérieur de l'alésage (12). Les projections (10) évitent la sortie du composant mâle (2) en dehors du composant femelle (3) et permettent la rotation du composant mâle (2) à l'intérieur de l'alésage (12) du composant femelle (3) grâce à un mouvement d'un quart de tour avec le pouce ou l'index de la main, par exemple vers la gauche, dans le sens du dévissage pour libérer le composant mâle (2), ou de la gauche vers la droite, dans le sens du vissage, pour bloquer le composant mâle (2) en position ouverte ou déployée. Dans cette position ouverte ou déployée, l'extrémité supérieure (17) du composant mâle (2) est libérée. Dans la position fermée ou rabattue, par contre, le composant mâle (2) est enfoncé et l'extrémité supérieure (17) est en affleurement de l'extrémité supérieure (18) du composant femelle (3).

Le corps allongé (4) du composant mâle (2) comporte une projection (32) qui présente un diamètre réduit dans sa partie supérieure (24) par rapport à la partie ou surépaisseur (33) portant les rainures (7, 8), et l'extrémité supérieure (17).

Les rainures (7, 8) pratiquées dans le corps allongé (4) du composant mâle (2) présentent des encoches inférieures (20), permettant de bloquer le composant mâle (2) en position déployée. Si le système de couplage n'est pas utile dans la construction du meuble ou que celui-ci est démonté, le composant mâle (2) est en position rentrée ou rabattue. Pour cela, on presse sur l'extrémité supérieure (17) du composant mâle (2) pour effectuer un déplacement longitudinal le long de l'axe longitudinal du système et en même temps une rotation d'un quart de tour, de manière à ce que les projections (10) puissent circuler dans la rainure verticale (7, 8) du composant mâle (2). Alors, par pression sur le ressort (11), on enfonce le corps allongé (4) du composant mâle (2) dans l'alésage (12) du corps allongé (5) du composant femelle (3) jusqu'à la butée supérieure de la rainure verticale (7, 8), puis on effectue une rotation d'un quart de tour de la droite vers la gauche, dans le sens de vissage, pour loger les projections (10) des moyens d'arrêt (9) dans les encoches supérieures (20) du corps allongé (4) du composant mâle (2), maintenant ce dernier en position fermée.

Le corps allongé (4) du composant mâle (2) peut être doté d'un chanfrein (21) à son extrémité inférieure (22), afin que le composant mâle (2), en position fermée, repose bien au fond du corps allongé (5) du composant femelle (3) au contact d'un chanfrein intérieur (23) situé au niveau de son extrémité inférieure (14).

L'extrémité supérieure (17) du composant mâle (2) peut être rainurée sur toute ou une partie de sa surface extérieure, offrant ainsi de la rugosité pour éviter le glissement du doigt, par exemple le pouce ou l'index, lors de la rotation du quart de tour dans un sens ou dans l'autre.

Comme indiqué ci-dessus, le corps allongé (4) du composant mâle (2) comporte une projection (32) qui présente un diamètre réduit dans sa partie supérieure (24) par rapport à la partie portant les rainures (7, 8) et l'extrémité supérieure (17). Cette partie supérieure (24) de diamètre réduit empêche l'extrémité supérieure (17) du composant mâle (2) de sortir de son logement lorsque l'extrémité supérieure (17) est glissée dans un logement prévu dans le panneau ou objet à assembler. Ce logement (25) peut être sous forme de cuvette fermée par une plaque de cuvette (26) adaptée en taille et dimensions pour recevoir ladite extrémité supérieure (17). La plaque de cuvette (26) peut être vissée, collée ou fixée de n'importe quelle manière appropriée dans le logement prévu dans l'objet ou le panneau à assembler.

Pour éviter la sortie de l'ensemble du système de couplage d'un logement destiné à le recevoir, par exemple, un trou de 8 mm de diamètre réalisé dans les panneaux ou objets à assembler, le composant femelle (3) peut être doté de moyens de prise élastique (27) sous la forme de projections extérieures (28) dans la partie inférieure (29) du corps allongé (5) du composant femelle (3). Celles-ci sont de préférence situées dans l'axe et au-dessous des projections (10) des moyens d'arrêt (9). On peut également prévoir des moyens de prise élastique sous la forme de projections (30), situées proche de, ou à l'extrémité supérieure (18) du corps allongé (5) du composant femelle (3). Ainsi, le composant femelle (3), une fois enfoncé dans la masse de l'objet à assembler, ne risque pas de ressortir de son logement dans le bois ou de toute autre matière dont ledit objet à assembler est constitué. Selon un mode d'exécution différent, mais également préféré du fait de sa facilité de réalisation, les moyens de prise élastique peuvent consister un bord périphérique annulaire (31), disposé sur le pourtour, et saillant vers l'extérieur, de l'extrémité supérieure du composant femelle. En effet, avec des moyens de prise élastique définis ainsi, il a été trouvé que l'on pouvait même se dispenser des projections extérieures (28, 30).

## Revendications

1. Système de couplage (1) comprenant au moins un composant mâle (2) et un composant femelle (3), dans lequel le composant mâle (2) s'insère dans le composant femelle (3) le long d'un axe longitudinal commun aux composants mâle (2) et femelle (3), et est retenu par le composant femelle (3) de manière amovible, **caractérisé en ce que** :
- le composant mâle (2) comprend un corps allongé (4) de forme sensiblement cylindrique, une extrémité ouverte (15) et une extrémité fermée opposée (17) ;
- le composant femelle (3) comprend un corps allongé (5) de forme sensiblement cylindrique et présentant un alésage intérieur (12) longitudinal de dimensions adaptées à l'insertion et à la rétention du composant mâle (2), une extrémité (18) ouverte et une extrémité fermée opposée (14) ;
- le composant mâle (2) s'insère par son extrémité ouverte (15) dans l'extrémité ouverte (14) du composant femelle (3) par un mouvement de déplacement longitudinal en même temps qu'une rotation d'un quart de tour ; et
- le composant mâle (2) comporte des moyens de blocage (7) en rotation et en déplacement le long de l'axe longitudinal coopérant avec des moyens d'arrêt (9) complémentaires présents dans le composant femelle (3).

2. Système de couplage (1) selon la revendication 1, dans lequel les moyens d'arrêt (9) complémentaires du composant femelle (3) comprennent des projections (10) se projetant au-delà d'une surface intérieure du corps allongé (5) du composant femelle (3) dans l'alésage intérieur (12) de ce dernier.

3. Système de couplage (1) selon la revendication 1 ou la revendication 2, dans lequel les moyens d'arrêt (9) complémentaires du composant femelle (3) comprennent des projections (10) disposées à des positions diamétralement opposés sur le corps allongé (5).

4. Système de couplage (1) selon l'une quelconque des revendications 1 à 3, dans lequel le composant femelle (3) comporte une projection (13) située à l'extrémité fermée (14) du composant femelle (3) dans l'axe longitudinal (6) et à l'intérieur de l'alésage (12) du corps allongé (5) du composant femelle (3).

5. Système de couplage (1) selon l'une quelconque des revendications 1 à 4, dans lequel le composant femelle (3) comporte des moyens de prise élastique (27) avec une surface d'appui entourant le composant femelle (3).

6. Système de couplage (1) selon la revendication 5, dans lequel les moyens de prise élastique (27) sont constitués par un bord périphérique annulaire (31), disposé sur le pourtour, et saillant vers l'extérieur, de l'extrémité ouverte (18) du composant femelle (3).

7. Système de couplage (1) selon la revendication 5 ou la revendication 6, dans lequel les moyens de prise élastique (27) se présentent sous forme de projections (28, 30) se projetant au-delà de la surface extérieure du corps allongé (5) du composant femelle (3).

8. Système de couplage (1) selon l'une quelconque des revendications 5 à 7, dans lequel les moyens de prise élastique (27) avec une surface d'appui entourant le composant femelle (3) sont disposées à des positions diamétralement opposés sur le corps allongé (5) du composant femelle (3).

9. Système de couplage (1) selon l'une quelconque des revendications précédentes, dans lequel le corps allongé (4) de forme sensiblement cylindrique du composant mâle (2) comporte un alésage axial (15) pratiqué dans le corps allongé (4) le long de l'axe longitudinal (6) du système (1).

10. Système de couplage (1) selon l'une quelconque des revendications précédentes, dans lequel le corps allongé (4) du composant mâle (2) comporte une extrémité (17) fermée de diamètre inférieur à un diamètre extérieur du corps allongé (5) du composant femelle (3), mais supérieur à un diamètre intérieur du corps allongé (5) du composant femelle (3).

11. Système de couplage (1) selon l'une quelconque des revendications précédentes, dans lequel le corps allongé (4) du composant mâle (2) se prolonge sous forme de projection (32) depuis l'extrémité fermée (17) vers l'extrémité opposée (22).

12. Système de couplage (1) selon la revendication 11, dans lequel la projection (32) du corps allongé (4) du composant mâle (2) présente un diamètre inférieur à l'extrémité fermée (17) du composant mâle (2), et inférieur à un diamètre intérieur du corps allongé (5) du composant femelle (3).

13. Système de couplage (1) selon l'une quelconque des revendications précédentes, dans lequel les moyens de blocage (7) en rotation et en déplacement le long de l'axe longitudinal (6) du composant mâle (2) sont situés sur la projection (32) du corps allongé (4).

14. Système de couplage (1) selon l'une quelconque des revendications précédentes, dans lequel les moyens de blocage (7) en rotation et en déplacement le long de l'axe longitudinal (6) du composant mâle (2) se présentent sous forme de rainure (8) pratiquée dans la projection (32) du corps allongé (4) du composant mâle (2).

15. Système de couplage (1) selon la revendication 14, dans lequel la rainure (8) pratiquée dans la projection (32) du corps allongé (4) du composant mâle (2) est sensiblement parallèle à l'axe longitudinal (6) du système.

16. Système de couplage (1) selon l'une quelconque des revendications précédentes, dans lequel les moyens de blocage (7) en rotation et en déplacement le long de l'axe longitudinal (6) du composant mâle (2) présentent une extrémité (19) et une extrémité opposée (20) sous forme d'encoches contiguës avec ladite rainure (8) et disposées de manière sensiblement orthogonales à celle-ci, de dimensions adaptées à recevoir les moyens d'arrêt (9) du composant femelle.

17. Système de couplage (1) selon l'une quelconque des revendications précédentes, dans lequel la rainure (8) et les encoches (19, 20) sont pratiquées dans une surépaisseur (33) de la projection (32) du corps allongé (4) du composant mâle (2), de diamètre inférieur à un diamètre intérieur du composant femelle (3).

18. Système de couplage (1) selon la revendication 1, lequel comporte en outre un moyen de contrainte élastique (11), disposé à l'intérieur de l'alésage (12) du corps allongé (5) du composant femelle (3), et se logeant à l'intérieur du corps allongé (4) du composant mâle (2).

19. Système de couplage (1) selon la revendication 18, dans lequel le moyen de contrainte élastique (11) est un ressort, dont une extrémité (34) se repose sur l'extrémité fermée (14) de l'alésage axial (12) du corps allongé (5) du composant femelle (3), disposé autour de la projection axiale (13) de ce dernier, et dont une extrémité opposée (35) vient se loger dans l'alésage axial (15) du corps allongé (4) du composant mâle (2).

20. Système de couplage (1) selon la revendication 18 ou la revendication 19, dans lequel l'extrémité supérieure (35) du moyen de contrainte élastique (11) se loge contre une butée (16) prévue dans l'alésage axial (15) du corps allongé (4) du composant mâle (2), ladite butée (16) étant située à une hauteur inférieure à la longueur totale de la rainure (8) et inférieure à la position correspondante de l'encoche (19).

21. Système de couplage (1) selon l'une quelconque des revendications précédentes, dans lequel le ressort (11) exerce une contrainte élastique sur le composant mâle (2), qui s'applique entre une position bloquée dans laquelle les moyens d'arrêt (9) se trouvent à l'extrémité de la rainure (8) dans l'encoche (19), et une position bloquée opposée dans laquelle les moyens d'arrêt (9) se trouvent à l'extrémité opposée dans l'encoche (20).

22. Système de couplage (1) selon l'une quelconque des revendications précédentes, dans lequel la course de déplacement longitudinal du corps allongé (4) du composant mâle (2) à l'intérieur du corps allongé (5) du composant femelle (3) est sensiblement égale à une longueur de la rainure (8) pratiquée dans le corps allongé (4) du composant mâle (2).

23. Système de couplage (1) selon la revendication 22, dans lequel la course de déplacement longitudinal du corps allongé (4) du composant mâle (2) est inférieure à une dimension longitudinale de l'alésage (12) du corps allongé (5) du composant femelle (3).

## Patentansprüche

1. Kupplungsvorrichtung (1) umfassend mindestens eine männliche Komponente (2) und eine weibliche Komponente (3), wobei die männliche Komponente (2) in die weibliche Komponente (3) entlang einer Längsachse, die den männlichen (2) und weiblichen (3) Komponenten gemeinsam ist, eingeführt wird, und durch die weibliche Komponente (3) abnehmbar gehalten wird, **dadurch gekennzeichnet, dass** :
die männliche Komponente (2) einen im Wesentlichen zylindrischen länglichen Körper (4), ein offenes Ende (15) und ein gegenüberliegendes geschlossenes Ende (17) umfasst ;
die weibliche Komponente (3) einen im Wesentlichen zylindrischen länglichen Körper (5) mit einer länglichen Innenbohrung (12) mit Abmessungen versehen ist, die zum Einführen und Halten der männlichen Komponente (2) geeignet sind, ein offenes Ende (18) und ein gegenüberliegendes geschlossenes Ende (14) umfasst ;
die männliche Komponente (2) durch dessen offenen Ende (15) in das offene Ende (14) der weiblichen Komponente (3) durch eine Längsverschiebungsbewegung zusammen mit einer Vierteldrehung eingeführt wird ; und
die männliche Komponente (2) ein in der Drehung und in der Verschiebung die Längsachse entlang Verriegelungsmittel (7) aufweist, die mit komplementären Anschlagmitteln (9) der weiblichen Komponente (3) zusammenwirken.

2. Kupplungsvorrichtung (1) nach Anspruch 1, wobei die komplementären Anschlagmittel (9) der weiblichen Komponente (3) Vorsprünge (10) aufweisen, die über eine Innenfläche des länglichen Körpers (5) der weiblichen Komponente (3) in deren Innenbohrung (12) vorstehen.

3. Kupplungsvorrichtung (1) nach Anspruch 1 oder Anspruch 2, wobei die komplementären Anschlagmittel (9) der weiblichen Komponente (3) Vorsprünge (10) aufweisen, die an diametral gegenüberliegenden Positionen auf dem länglichen Körper (5) angeordnet sind.

4. Kupplungsvorrichtung (1) nach irgendeinem der Ansprüche 1 bis 3, wobei die weibliche Komponente (3) einen Vorsprung (13) aufweist, der am geschlossenen Ende (14) der weiblichen Komponente (3) in der Längsachse (6) und innerhalb der Bohrung (12) des länglichen Körpers (5) der weiblichen Komponente (3) angeordnet ist.

5. Kupplungsvorrichtung (1) nach irgendeinem der Ansprüche 1 bis 4, wobei die weibliche Komponente (3) elastische mit einer die weibliche Komponente (3) umgebenden Lagerfläche versehenen Fassungsmittel (27) aufweist.

6. Kupplungsvorrichtung (1) nach Anspruch 5, wobei die elastischen Fassungsmittel (27) durch einen ringförmigen Umfangsrand (31) gebildet sind, der am Umfang des offenen Endes (18) der weiblichen Komponente (3) angeordnet ist und nach außen vorsteht.

7. Kupplungsvorrichtung (1) nach Anspruch 5 oder Anspruch 6, wobei die elastischen Fassungsmittel (27) als Vorsprüngen (28, 30) gebildet sind, die über die Außenfläche des länglichen Körpers (5) der weiblichen Komponente (3) hinausragen.

8. Kupplungsvorrichtung (1) nach irgendeinem der Ansprüche 5 bis 7, wobei die elastische mit einer die weibliche Komponente (3) umgebenden Lagerfläche versehenen Fassungsmittel (27) an diametral gegenüberliegenden Positionen auf dem länglichen Körper (5) der weiblichen Komponente (3) angeordnet sind.

9. Kupplungsvorrichtung (1) nach irgendeinem der vorhergehenden Ansprüche, wobei der im Wesentlichen zylindrische längliche Körper (4) der männlichen Komponente (2) eine axiale Bohrung (15) entlang der Längsachse (6) des Systems (1) in dem länglichen Körper (4) aufweist.

10. Kupplungsvorrichtung (1) nach irgendeinem der vorhergehenden Ansprüche, wobei der längliche Körper (4) der männlichen Komponente (2) ein geschlossenes Ende (17) mit einem Durchmesser aufweist, der kleiner als ein Außendurchmesser des länglichen Körpers (5) der weiblichen Komponente (3), aber größer als ein Innendurchmesser des länglichen Körpers (5) der weiblichen Komponente (3) ist.

11. Kupplungsvorrichtung (1) nach irgendeinem der vorhergehenden Ansprüche, wobei der längliche Körper (4) der männlichen Komponente (2) sich als Vorsprung (32) vom geschlossenen Ende (17) in Richtung des gegenüberliegenden Endes (22) erstreckt.

12. Kupplungsvorrichtung (1) nach Anspruch 11, wobei der Vorsprung (32) des länglichen Körpers (4) der männlichen Komponente (2) einen Durchmesser aufweist, der kleiner als das geschlossene Ende (17) der männlichen Komponente (2), und kleiner als ein Innendurchmesser des länglichen Körpers (5) der weiblichen Komponente (3), ist.

13. Kupplungsvorrichtung (1) nach irgendeinem der vorhergehenden Ansprüche, wobei das in der Drehung und in der Verschiebung die Längsachse entlang Verriegelungsmittel (7) der männlichen Komponente (2) auf dem Vorsprung (32) des länglichen Körpers (4) angeordnet ist.

14. Kupplungsvorrichtung (1) nach irgendeinem der vorhergehenden Ansprüche, wobei das in der Drehung und in der Verschiebung die Längsachse entlang Verriegelungsmittel (7) der männlichen Komponente (2) als Nut (8) in dem Vorsprung (32) des länglichen Körpers (4) der männlichen Komponente (2) ausgebildet ist.

15. Kupplungsvorrichtung (1) nach Anspruch 14, wobei die im Vorsprung (32) ausgebildete Nut des länglichen Körpers (4) der männlichen Komponente (2) im Wesentlichen parallel zur Längsachse (6) des Systems verläuft.

16. Kupplungsvorrichtung (1) nach irgendeinem der vorhergehenden Ansprüche, wobei das in der Drehung und in der Verschiebung die Längsachse entlang Verriegelungsmittel (7) der männlichen Komponente (2) ein Ende (19) und ein gegenüberliegendes Ende (20), aufweist, die als Kerben ausgebildet sind, welche an die Nut (8) angrenzen und im wesentlichen orthogonal dazu angeordnet sind, mit Abmessungen, die geeignet sind, die Anschlagmittel (9) der weiblichen Komponente aufzunehmen.

17. Kupplungsvorrichtung (1) nach irgendeinem der vorhergehenden Ansprüche, wobei die Nut (8) und die Kerben (19, 20) in einer Überdicke (33) des Vorsprungs (32) des länglichen Körpers (4) der männlichen Komponente (2) ausgeführt sind, die im Durchmesser kleiner als ein Innendurchmesser der weiblichen Komponente (3) ist.

18. Kupplungsvorrichtung (1) nach Anspruch 1, das ferner ein elastisches Spannmittel (11) aufweist, das in der Bohrung (12) des länglichen Körpers (5) der weiblichen Komponente (3) angeordnet, und im Innenraum des länglichen Körpers (4) der männlichen Komponente (2) untergebracht, ist.

19. Kupplungsvorrichtung (1) nach Anspruch 18, wobei das elastische Spannmittel (11) eine Feder ist, deren eines Ende (34) sich auf dem geschlossenen Ende (14) der axialen Bohrung (12) des länglichen Körpers (5) der weiblichen Komponente (3) abstützt und um den axialen Vorsprung (13) der letzteren angeordnet ist, und deren gegenüberliegendes Ende (35) in der axialen Bohrung (15) des länglichen Körpers (4) de männlichen Komponente (2) aufgenommen ist.

20. Kupplungsvorrichtung (1) nach Anspruch 18 oder Anspruch 19, wobei das obere Ende (35) des elastischen Spannmittels (11) gegen einen in der axialen Bohrung (15) des länglichen Körpers (4) der männlichen Komponente (2) vorgesehenen Anschlag (16) untergebracht wird, wobei der Anschlag (16) in einer Höhe angeordnet ist, die niedriger als die Gesamtlänge der Nut (8) und niedriger als die entsprechende Position der Kerbe (19) ist.

21. Kupplungsvorrichtung (1) nach irgendeinem der vorhergehenden Ansprüche, wobei die Feder (11) eine Federvorspannung auf die männliche Komponente (2) ausübt, welche zwischen einer verriegelten Position, in der sich die Anschlagmittel (9) am Ende der Nut (8) in der Kerbe (19) befinden, und einer entgegengesetzten verriegelten Position, in der sich die Anschlagmittel (9) am entgegengesetzten Ende in der Kerbe (20) befinden, angewendet wird.

22. Kupplungsvorrichtung (1) nach irgendeinem der vorhergehenden Ansprüche, wobei der Längsverschiebungshub des länglichen Körpers (4) der männlichen Komponente (2) innerhalb des länglichen Körpers (5) der weiblichen Komponente (3) im Wesentlichen gleich einer Länge der in dem länglichen Körper (4) der männlichen Komponente (2) ausgebildeten Nut (8) ist.

23. Kupplungsvorrichtung (1) nach Anspruch 22, wobei der Längsverschiebungshub des länglichen Körpers (4) der männlichen Komponente (2) kleiner ist als eine Längsabmessung der Bohrung (12) des länglichen Körpers (5) der weiblichen Komponente (3).

## Claims

1. A coupling system (1) comprising at least a male component (2) and a female component (3), wherein the male component (2) is insertable into the female component (3) along a longitudinal axis common to the male (2) and female (3) components, and is retained movably by the female component (3), **characterized in that**:
the male component (2) comprises a substantially cylindrical elongated body (4), an open end (15) and an opposite, closed end (17);
the female component (3) comprises a substantially cylindrical elongated body (5) having an inner longitudinal bore (12) of dimensions which are adapted to the insertion and retaining of the male component (2), an open extremity (18) and an opposite, closed extremity (14);
the male component (2) is insertable via its open end (15) into the open end (14) of the female component (3) via a simultaneous longitudinal displacement movement and a quarter-rotation movement; and
the male component (2) includes blocking means (7) preventing longitudinal axis displacement and rotation, which cooperate with complementary stopping means (9) present in the female component (3).

2. The coupling system (1) according to claim 1, wherein the complementary stopping means (9) of the female component (3) comprise projections (10) extending from an inner surface of the elongated body (5) of the female component (3) into the inner bore (12) of the latter.

3. The coupling system (1) according to claim 1, wherein the complementary stopping means (9) of the female component (3) comprise projections (10) located at diametrically opposed positions on the elongated body (5).

4. The coupling system (1) according to any one of claims 1 to 3, wherein the female component (3) includes a projection (13) located at the closed end (14) of the female component (3) along the longitudinal axis (6) and inside the bore (12) of the elongated body (5) of the female component (3).

5. The coupling system (1) according to any one of claims 1 to 4, wherein the female component (3) includes elastic bearing means (27) having a bearing surface that surrounds the female component (3).

6. The coupling system (1) according to claim 5, wherein the elastic bearing means (27) consist of a peripheral annular edge (31), located around the periphery of, and projecting exteriorly from, the open end (18) of the female component (3).

7. The coupling system (1) according to claim 5 or claim 6, wherein the elastic bearing means (27) are shaped as projections (28, 30) which project outwardly from the outer surface of the elongated body (5) of the female component (3).

8. The coupling system (1) according to any one of claims 5 to 7, wherein the elastic bearing means (27), having a bearing surface that surrounds the female component (3), are located at diametrically opposed positions on the elongated body (5) of the female component.

9. The coupling system (1) according to any one of the preceding claims, wherein the substantially cylindrical elongated body (4) of the male component (2) includes an axial bore (15) made within the elongated body (4) along the longitudinal axis (6) of the coupling system (1).

10. The coupling system (1) according to any one of the preceding claims, wherein the elongated body (4) of the male component (2) includes a closed end (17) having a diameter less than an external diameter of the elongated body (5) of the female component (3), but greater than an inner diameter of the elongated body (5) of the female component (3).

11. The coupling system (1) according to any one of the preceding claims, wherein the elongated body (4) of the male component (2) extends in the shape of a projection (32) from the closed end (17) towards the opposite end (22).

12. The coupling system (1) according to claim 11, wherein the projection (32) of the elongated body (4) of the male component (2) has a diameter which is less than that of the closed end (17) of the male component (2), and less than an inner diameter of the elongated body (5) of the female component (3).

13. The coupling system (1) according to any one of the preceding claims, wherein the longitudinal axis (6) displacement and rotational movement blocking means (7) of the male component (2) are located on the projection (32) of the elongated body (4).

14. The coupling system (1) according to any one of the preceding claims, wherein the longitudinal axis (6) displacement and rotational movement blocking means (7) of the male component (2) are present as a groove (8) made in the projection (32) of the elongated body (4) of the male component (2).

15. The coupling system (1) according to claim 14, wherein the groove (8) made in the projection (32) of the elongated body (4) of the male component (2) is substantially parallel to the longitudinal axis (6) of the coupling system (1).

16. The coupling system (1) according to any one of the preceding claims, wherein the longitudinal axis (6) displacement and rotational movement blocking means (7) of the male component (2) have an extremity (19) and an opposite extremity (20) which are present as notches that are contiguous with said groove (8), and located substantially orthogonally to the latter, with dimensions which are adapted to receive the stopping means (9) of the female component (3).

17. The coupling system (1) according to any one of the preceding claims, wherein the groove (8) and the notches (19, 20) are made in a thickened area (33) of the projection (32) of the elongated body (4) of the male component (2), which thickened area (33) has a diameter less than the inner diameter of the female component (3).

18. The coupling system (1) according to claim 1, further including a means (11) for applying an elastic constraint, located inside the bore (12) of the elongated body (5) of the female component (3), and which fits into the interior of the elongated body (4) of the male component (2).

19. The coupling system (1) according to claim 18, wherein the means (11) for applying an elastic constraint is a spring, of which one end (34) rests on the closed end (14) of the axial bore (12) of the elongated body (5) of the female component (3), and is located around the axial projection (13) of the latter, an opposite end (35) of said spring fitting into the axial bore (15) of the elongated body (4) of the male component (2).

20. The coupling system (1) according to claim 18 or claim 19, wherein the upper extremity (35) of the means (11) for applying an elastic constraint fits against a stop (16) provided in the axial bore (15) of the elongated body (4) of the male component (2), said stop (16) being located at a height less than the total length of the groove (8) and lower than the corresponding position of the notch (19).

21. The coupling system (1) according to any one of the preceding claims, wherein the spring (11) exerts an elastic constraint on the male component (2), which is applicable between a blocked position in which the stopping means (9) are located at the end of the groove (8) in the notch (19), and an opposite, blocked position in which the stopping means (9) are located at the opposite end in the notch (20).

22. The coupling system (1) according to any one of the preceding claims, wherein the run of longitudinal movement of the elongated body (4) of the male component (2) inside the elongated body (5) of the female component (3) is substantially equal to a length of the groove (8) made in the elongated body (4) of the male component (2).

23. The coupling system (1) according to claim 22, wherein the run of longitudinal movement of the elongated body (4) of the male component (2) is less than a longitudinal dimension of the bore (12) of the elongated body (5) of the female component (3).
